# EUROPÄISCHE PATENTANMELDUNG

(11) **EP 4 779 185 A1**
(43) Veröffentlichungstag der Anmeldung: **22.07.2026**
(21) Anmeldenummer: 25226678.8
(22) Anmeldetag: 23.12.2025
(51) Int. Cl.: F16K 15/18, F16K 27/02, F16K 35/06

(54) **RÜCKSCHLAGVENTIL**

(30) Priorität: 15.01.2025 DE 102025101212
(71) Anmelder: Viessmann Holding International GmbH, 35108 Allendorf (Eder) (DE)
(72) Erfinder: Müller, Marco, 35066 Frankenberg (DE)
(74) Vertreter: Wolf & Wolf Patentanwaltsgesellschaft mbH

(57) **Zusammenfassung**

Die Erfindung betrifft ein Rückschlagventil, umfassend ein Ventilgehäuse (1) mit einem Zufuhrbereich (1.10) und mit einem Abfuhrbereich (1.20), einen im Ventilgehäuse (1) beweglich gelagerten, zur Durchflussbegrenzung zwischen dem Zu- und Abfuhrbereich (1.10, 1.20) ausgebildeten Ventilkörper (2) und ein von außerhalb des Ventilgehäuses (1) bedienbares, zur Bewegung des Ventilkörpers (2) ausgebildetes Betätigungselement (3), wobei das Ventilgehäuse (1) zur Bedienung des Betätigungselements (3) aus zwei zueinander abgedichtet verstellbaren Gehäuseabschnitten (1.1, 1.2) gebildet ist, wobei an einem der beiden Gehäuseabschnitte (1.1) der Ventilkörper (2) beweglich gelagert ist und wobei im anderen der beiden Gehäuseabschnitte (1.2) das mit dem Ventilkörper (2) zusammenwirkende Betätigungselement (3) angeordnet ist. Nach der Erfindung ist an einem der beiden Gehäuseabschnitte (1.2) eine Führungseinrichtung (4) für ein mit dem anderen Gehäuseabschnitt (1.1) in Wirkverbindung bringbares Aufhalteelement (5) vorgesehen.

## Beschreibung

Die Erfindung betrifft ein Rückschlagventil gemäß dem Oberbegriff des Patentanspruchs 1.

Ein Rückschlagventil der eingangs genannten Art ist aus dem Patentdokument DE 102 06 077 A1 bekannt.

Ein weiteres Rückschlagventil ist aus dem Patentdokument EP 3 225 851 A1 bekannt. Dieses Rückschlagventil besteht aus einem Ventilgehäuse mit einem Zufuhrbereich und mit einem Abfuhrbereich, einem im Ventilgehäuse beweglich gelagerten, zur Durchflussbegrenzung zwischen dem Zu- und Abfuhrbereich ausgebildeten Ventilkörper und einem von außerhalb des Ventilgehäuses bedienbaren, zur Bewegung des Ventilkörpers ausgebildeten Betätigungselement. Bei dieser Lösung ist am Ventilgehäuse eine abgedichtete Durchgriffsöffnung für das Betätigungselement vorgesehen, das einerseits von außerhalb des Ventilgehäuses von einem Benutzer anfass- und betätigbar und andererseits im Ventilgehäuse mit dem Ventilkörper verbunden ausgebildet ist.

Der Erfindung liegt die Aufgabe zugrunde, ein Rückschlagventil der eingangs genannten Art zu verbessern. Insbesondere soll ein besonders zuverlässig arbeitendes Rückschlagventil geschaffen werden.

Diese Aufgabe ist mit einem Rückschlagventil der eingangs genannten Art durch die im Kennzeichen des Patentanspruchs 1 aufgeführten Merkmale gelöst.

Nach der Erfindung ist also an einem der beiden Gehäuseabschnitte eine Führungseinrichtung für ein mit dem anderen Gehäuseabschnitt in Wirkverbindung bringbares Aufhalteelement vorgesehen.

Mit anderen Worten zeichnet sich die erfindungsgemäße Lösung somit unter anderem dadurch aus, dass eine Wirkverbindung zwischen dem Betätigungselement und dem Ventilkörper mit Hilfe eines Zusammenspiels der beiden zueinander abgedichtet verstellbaren Gehäuseabschnitte realisiert ist. Diese Lösung ist dabei im Vergleich zum eingangs genannten Stand der Technik (genauer: EP 3 225 851 A1) besonders zuverlässig, weil am Betätigungselement selbst keine Dichtung erforderlich ist.

Andere vorteilhafte Weiterbildungen des erfindungsgemäßen Rückschlagventils ergeben sich aus den abhängigen Patentansprüchen.

Der Vollständigkeit halber wird noch auf das weiter abliegende Dokument EP 2 896 856 A1 hingewiesen.

Das erfindungsgemäße Rückschlagventil einschließlich seiner vorteilhaften Weiterbildungen gemäß der abhängigen Patentansprüche wird nachfolgend anhand der zeichnerischen Darstellung eines bevorzugten Ausführungsbeispiels näher erläutert.

### Es zeigt

- Figur 1: im Schnitt entlang der Linie A-A in Figur 7 das erfindungsgemäße Rückschlagventil in geschlossener, also fluidundurchlässiger Position;
- Figur 2: im Schnitt entlang der Linie A-A in Figur 8 das erfindungsgemäße Rückschlagventil in geöffneter, also fluiddurchlässiger Position;
- Figur 3: perspektivisch das Rückschlagventil gemäß Figur 1, also in geschlossener, fluidundurchlässiger Position;
- Figur 4: perspektivisch das Rückschlagventil gemäß Figur 2, also in geöffneter, fluiddurchlässiger Position;
- Figur 5: als Seitenansicht das Rückschlagventil gemäß Figur 1 in geschlossener Position;
- Figur 6: als Seitenansicht das Rückschlagventil gemäß Figur 2 in geöffneter Postion;
- Figur 7: als Vorderansicht das Rückschlagventil gemäß Figur 1 in geschlossener Position; und
- Figur 8: als Vorderansicht das Rückschlagventil gemäß Figur 2 in geöffneter Position.

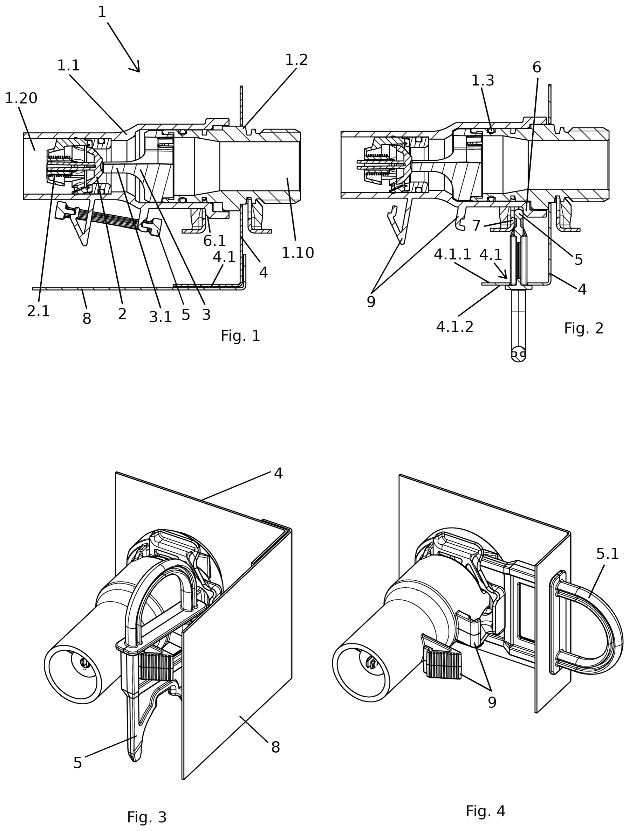

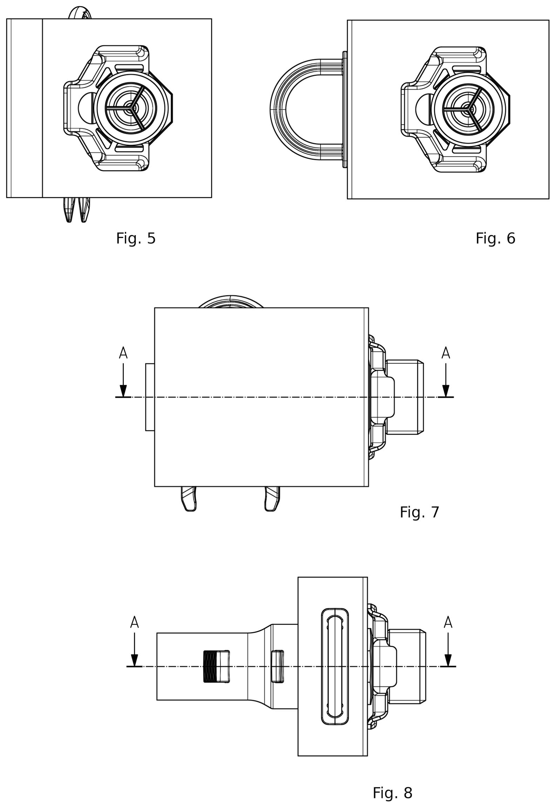

Das in den Figuren 1 bis 8 dargestellte, wahlweise zum Leiten oder zum Nichtleiten eines Fluids, insbesondere Wasser, vorgesehene Rückschlagventil besteht, wie an sich bekannt, aus einem Ventilgehäuse 1 mit einem Zufuhrbereich 1.10 und mit einem Abfuhrbereich 1.20, einem im Ventilgehäuse 1 beweglich gelagerten, zur Durchflussbegrenzung zwischen dem Zu- und Abfuhrbereich 1.10, 1.20 ausgebildeten Ventilkörper 2 (mit seinem entsprechend passenden Ventilsitz am Ventilgehäuse 1) und einem von außerhalb des Ventilgehäuses 1 bedienbaren, zur Bewegung des Ventilkörpers 2 ausgebildeten Betätigungselement 3.

Bei alledem ist bevorzugt zwischen dem Gehäuseabschnitt 1.1 und dem Ventilkörper 2 ein diesen in Verschlussposition drückendes Federelement 2.1, vorzugsweise eine Schraubendruckfeder, vorgesehen. Ferner ist bevorzugt vorgesehen, dass das Betätigungselement 3 wahlweise mit einem Zentralbereich des Ventilkörpers 2 zusammenwirkend ausgebildet ist und/oder einen dornförmigen, mit dem Ventilkörper 2 zusammenwirkenden Abschnitt 3.1 aufweist.

Ferner ist vorgesehen, dass das Ventilgehäuse 1 zur Bedienung des Betätigungselements 3 aus zwei zueinander abgedichtet verstellbaren Gehäuseabschnitten 1.1, 1.2 gebildet ist, wobei an einem der beiden Gehäuseabschnitte 1.1 der Ventilkörper 2 beweglich gelagert ist und wobei im anderen der beiden Gehäuseabschnitte 1.2 das mit dem Ventilkörper 2 zusammenwirkende Betätigungselement 3 angeordnet ist.

Noch etwas genauer betrachtet, ist weiterhin bevorzugt vorgesehen, dass die Gehäuseabschnitte 1.1, 1.2 mindestens teilweise rohrförmig ausgebildet sind. Dabei ist besonders bevorzugt ein rohrförmiges Teil des einen Gehäuseabschnitts 1.2 konzentrisch in einem rohrförmigen Teil des anderen Gehäuseabschnitts 1.1 vorzugsweise begrenzt verschieblich und abgedichtet angeordnet ist.

Damit das Rückschlagventil abgesehen von seinem Zu- und Abfuhrbereich 1.10, 1.20 darüber hinaus fluiddicht ist, ist ferner genauer betrachtet besonders bevorzugt zwischen den rohrförmigen Teilen (mindestens) eine Ringdichtung 1.3 (siehe Figur 2), insbesondere ein sogenannter O-Ring, angeordnet.

Um das erfindungsgemäße Rückschlagventil besonders einfach herstellen zu können, ist ferner bevorzugt vorgesehen, dass die Gehäuseabschnitte 1.1, 1.2 aus Kunststoff gebildet sind.

Zur Realisierung einer besonders einfachen Bedienung des Rückschlagventils ist erfindungsgemäß an einem der beiden Gehäuseabschnitte 1.2 eine Führungseinrichtung 4 für ein mit dem anderen Gehäuseabschnitt 1.1 in Wirkverbindung bringbares Aufhalteelement 5 vorgesehen. Dabei ist weiterhin besonders bevorzugt vorgesehen, dass wahlweise die Führungseinrichtung 4 aus Metall, vorzugsweise aus Blech, und/oder das Aufhalteelement 5 aus Kunststoff gebildet ist.

Noch etwas genauer betrachtet, ist zur Bedienung des erfindungsgemäßen Rückschlagventils besonders bevorzugt vorgesehen, dass das besagte Aufhalteelement 5 durch Einführen in die Führungseinrichtung 4 eine Verschiebung der Gehäuseabschnitte 1.1, 1.2 zueinander bewirkend ausgebildet ist.

Dabei ist weiterhin besonders bevorzugt zum Verschieben der Gehäuseabschnitte 1.1, 1.2 zueinander außen am den Ventilkörper 2 aufnehmenden Gehäuseabschnitt 1.1 ein mit dem Aufhalteelement 5 zusammenwirkendes, vorzugsweise mit einer Führungsschräge 6.1 versehenes Stellelement 6 vorgesehen.

Diesem Stellelement 6, das vorzugsweise als Rohrschulter ausgebildet ist, ist dabei ferner bevorzugt ein fest, aber lösbar mit dem das Betätigungselement 3 aufnehmenden Gehäuseabschnitt 1.2 verbundenes Widerlagerelement 7 zugeordnet. Außerdem ist bevorzugt vorgesehen, dass das Aufhalteelement 5 zum Verschieben der Gehäuseabschnitte 1.1, 1.2 zueinander zwischen dem Stellelement 6 und dem Widerlagerelement 7 einführbar und diese dabei auseinander drückend ausgebildet ist. Darüber hinaus ist besonders bevorzugt vorgesehen, dass das Widerlagerelement 7 als ein ein Lösen der Gehäuseabschnitte 1.1, 1.2 voneinander verhindernder Anschlag für das Stellelement 6 ausgebildet ist.

Ferner ist bevorzugt vorgesehen, dass die Führungseinrichtung 4 zum Einführen des Aufhalteelements 5 eine Durchgangsöffnung 4.1 aufweist. Dabei ist weiterhin bevorzugt vorgesehen, dass die Durchgangsöffnung 4.1 eine dem Ventilgehäuse 1 zugewandte Seite 4.1.1 und eine vom Ventilgehäuse 1 abgewandte Seite 4.1.2 aufweist. Außerdem ist bevorzugt vorgesehen, dass das Aufhalteelement 5 während einer Einwirkung auf die Gehäuseabschnitte 1.1, 1.2 (also bei eingeführtem Aufhalteelement 5) einen auf der vom Ventilgehäuse 1 abgewandten Seite 4.1.2 der Durchgangsöffnung 4.1 verbleibenden Sperrabschnitt 5.1 aufweist, dessen Funktion weiter unten noch genauer erläutert wird.

Ferner ist bevorzugt vorgesehen, dass die vom Ventilgehäuse 1 abgewandte Seite 4.1.2 der Durchgangsöffnung 4.1 bei nicht eingeführtem Aufhalteelement 5 (also wenn das Aufhalteelement 5 nicht auf die Gehäuseabschnitte 1.1, 1.2 einwirkt) als Anlagefläche für ein Gehäuseteil 8 (vorzugsweise eines wärmetechnischen Gerätes) ausgebildet ist; auch dies wird nachfolgend noch genauer beschrieben.

Schließlich ist noch bevorzugt am Ventilgehäuse 1 eine Verwahreinrichtung 9 zur Aufnahme bzw. Aufbewahrung des Aufhalteelements 5 bei Nichtbenutzung desselben vorgesehen, die zum Beispiel in Form eines Halters ausgebildet ist, an den das Aufhalteelement 5 angeklipst werden kann.

Das erfindungsgemäße Rückschlagventil funktioniert wie folgt:
Ausgangspunkt dieser Beschreibung ist Figur 3, in der das erfindungsgemäße Rückschlagventil in geschlossener Position des Ventilkörpers 2 dargestellt ist, wobei darüber hinaus ein Gehäuseteil 8 an der Führungseinrichtung 4 anliegt. Diese Position ist typisch für eine Wärmepumpe bei nicht gefördertem Fluid (oder auch ohne Fluid). Im Normalbetrieb, also wenn die Wärmepumpe stationär läuft, haben die Gehäuseabschnitte 1.1 und 1.2 auch die in Figur 3 dargestellte Position, aufgrund des geförderten Fluides ist der Ventilkörper 2 dann aber in geöffneter Position.

Ist bei dieser Wärmepumpe aber dann zum Beispiel bei einer Wartung oder dergleichen eine Entleerung des hydraulischen Systems erforderlich, wird zunächst das Gehäuseteil 8, typischerweise ein Deckelelement an der Wärmepumpe, abgenommen. Hierdurch ergibt sich ein Zugriff auf das Aufhalteelement 5, das sich zu diesem Zeitpunkt noch an der Verwahreinrichtung 9 (siehe auch Figur 4) befindet, aber nunmehr abgenommen werden kann. Durch das Entfernen des Gehäuseteils 8 wird dabei gleichzeitig die Durchgangsöffnung 4.1 (siehe auch Figur 1) an der Führungseinrichtung 4 zugänglich, durch die nunmehr das Aufhalteelement 5 gesteckt werden kann.

Wie insbesondere aus dem Vergleich der Figuren 1 und 2 ersichtlich, führt das Einstecken des Aufhalteelements 5 zwischen das Stellelement 6 und das Widerlager 7 dazu, dass der Gehäuseabschnitt 1.1 in Richtung des Gehäuseabschnitts 1.2 (in den Figuren also nach rechts) verschoben wird.

Diese Verschiebung bewirkt dabei, dass der Ventilsitz des Ventilkörpers 2 (ebenfalls nach rechts) verschoben wird, wobei gleichzeitig das Betätigungselement 3 den Ventilkörper 2 in Position hält, so dass das erfindungsgemäße Rückschlagventil insgesamt in Öffnungsstellung geht, was gleichzeitig bedeutet, dass ein am Zufuhrbereich 1.10 anstehendes Fluid nunmehr über den Ventilkörper 2 zum Abfuhrbereich 1.20 gelangen und dort abfließen kann.

Da bei alledem der Sperrabschnitt 5.1 ein Wiederverschließen des Gehäuses mit dem Gehäuseteil 8 ausschließt, ist, was für den Betrieb einer solchen Wärmepumpenanlage sehr wichtig ist, sicher gestellt, dass die besagte Entleerung beendet werden muss, bevor das Gehäuseteil 8 wieder montiert wird. Eine Fehlbedienung des erfindungsgemäßen Rückschlagventils wird auf diese Weise sicher ausgeschlossen.

### Bezugszeichenliste

- 1: Ventilgehäuse
- 1.1: Gehäuseabschnitt
- 1.2: Gehäuseabschnitt
- 1.3: Ringdichtung
- 1.10: Zufuhrbereich
- 1.20: Abfuhrbereich
- 2: Ventilkörper
- 2.1: Federelement
- 3: Betätigungselement
- 3.1: Abschnitt
- 4: Führungseinrichtung
- 4.1: Durchgangsöffnung
- 4.1.1: zugewandte Seite
- 4.1.2: abgewandte Seite
- 5: Aufhalteelement
- 5.1: Sperrabschnitt
- 6: Stellelement
- 6.1: Führungsschräge
- 7: Widerlagerelement
- 8: Gehäuseteil
- 9: Verwahreinrichtung

## Patentansprüche

1. Rückschlagventil, umfassend ein Ventilgehäuse (1) mit einem Zufuhrbereich (1.10) und mit einem Abfuhrbereich (1.20), einen im Ventilgehäuse (1) beweglich gelagerten, zur Durchflussbegrenzung zwischen dem Zu- und Abfuhrbereich (1.10, 1.20) ausgebildeten Ventilkörper (2) und ein von außerhalb des Ventilgehäuses (1) bedienbares, zur Bewegung des Ventilkörpers (2) ausgebildetes Betätigungselement (3), wobei das Ventilgehäuse (1) zur Bedienung des Betätigungselements (3) aus zwei zueinander abgedichtet verstellbaren Gehäuseabschnitten (1.1, 1.2) gebildet ist, wobei an einem der beiden Gehäuseabschnitte (1.1) der Ventilkörper (2) beweglich gelagert ist und wobei im anderen der beiden Gehäuseabschnitte (1.2) das mit dem Ventilkörper (2) zusammenwirkende Betätigungselement (3) angeordnet ist, **dadurch gekennzeichnet,**
**dass** an einem der beiden Gehäuseabschnitte (1.2) eine Führungseinrichtung (4) für ein mit dem anderen Gehäuseabschnitt (1.1) in Wirkverbindung bringbares Aufhalteelement (5) vorgesehen ist.

2. Rückschlagventil nach Anspruch 1,
**dadurch gekennzeichnet,**
**dass** das Aufhalteelement (5) durch Einführen in die Führungseinrichtung (4) eine Verschiebung der Gehäuseabschnitte (1.1, 1.2) zueinander bewirkend ausgebildet ist.

3. Rückschlagventil nach Anspruch 1 oder 2,
**dadurch gekennzeichnet,**
**dass** zum Verschieben der Gehäuseabschnitte (1.1, 1.2) zueinander außen am den Ventilkörper (2) aufnehmenden Gehäuseabschnitt (1.1) ein mit dem Aufhalteelement (5) zusammenwirkendes Stellelement (6) vorgesehen ist.

4. Rückschlagventil nach Anspruch 3,
**dadurch gekennzeichnet,**
**dass** dem Stellelement (6) ein fest, aber lösbar mit dem das Betätigungselement (3) aufnehmenden Gehäuseabschnitt (1.2) verbundenes Widerlagerelement (7) zugeordnet ist.

5. Rückschlagventil nach Anspruch 3 und 4,
**dadurch gekennzeichnet,**
**dass** das Aufhalteelement (5) zum Verschieben der Gehäuseabschnitte (1.1, 1.2) zueinander zwischen dem Stellelement (6) und dem Widerlagerelement (7) einführbar und diese dabei auseinander drückend ausgebildet ist.

6. Rückschlagventil nach Anspruch 4 oder 5,
**dadurch gekennzeichnet,**
**dass** das Widerlagerelement (7) als ein ein Lösen der Gehäuseabschnitte (1.1, 1.2) voneinander verhindernder Anschlag für das Stellelement (6) ausgebildet ist.

7. Rückschlagventil nach einem der Ansprüche 1 bis 6,
**dadurch gekennzeichnet,**
**dass** die Führungseinrichtung (4) zum Einführen des Aufhalteelements (5) eine Durchgangsöffnung (4.1) aufweist.

8. Rückschlagventil nach Anspruch 7,
**dadurch gekennzeichnet,**
**dass** die Durchgangsöffnung (4.1) eine dem Ventilgehäuse (1) zugewandte Seite (4.1.1) und eine vom Ventilgehäuse (1) abgewandte Seite (4.1.2) aufweist.

9. Rückschlagventil nach Anspruch 8,
**dadurch gekennzeichnet,**
**dass** das Aufhalteelement (5) während einer Einwirkung auf die Gehäuseabschnitte (1.1, 1.2) einen auf der vom Ventilgehäuse (1) abgewandten Seite (4.1.2) der Durchgangsöffnung (4.1) verbleibenden Sperrabschnitt (5.1) aufweist.

10. Rückschlagventil nach 9 oder 10,
**dadurch gekennzeichnet,**
**dass** die vom Ventilgehäuse (1) abgewandte Seite (4.1.2) der Durchgangsöffnung (4.1) bei nicht eingeführtem Aufhalteelement (5) als Anlagefläche für ein Gehäuseteil (8) ausgebildet ist.

11. Rückschlagventil nach einem der Ansprüche 1 bis 10,
**dadurch gekennzeichnet,**
**dass** am Ventilgehäuse (1) eine Verwahreinrichtung (9) zur Aufnahme des Aufhalteelements (5) bei Nichtbenutzung desselben vorgesehen ist.
